# EUROPEAN PATENT APPLICATION

(11) **EP 3 023 928 A1**
(43) Date of publication of application: **25.05.2016**
(21) Application number: 15195441.9
(22) Date of filing: 19.11.2015
(51) Int. Cl.: G06Q 50/06, G06Q 10/00

(54) **METHOD AND DEVICE FOR SETTING TASK**

(30) Priority: 21.11.2014 CN 201410674070
(71) Applicant: Xiaomi Inc., Beijing 100085 (CN)
(72) Inventor: ZHANG, Bin, 100085 Beijing (CN); SU, Jun, 100085 Beijing (CN); XIA, Yongfeng, 100085 Beijing (CN); HU, Yunlin, 100085 Beijing (CN); WANG, Yang, 100085 Beijing (CN); CHEN, Hao, 100085 Beijing (CN)
(74) Representative: Fontenelle, Sandrine

(57) **Abstract**

A method and a device for setting a task are disclosed herein, which belong to the field of computer technologies. The method for setting a task includes: acquiring (201) a history operation record of a user for operating a household appliance; detecting (202) whether a regular task exists according to the history operation record, the regular task being a task corresponding to an operation which has been received at a fixed moment for more than a predetermined number of times; and if the regular task exists, setting (203) a corresponding regular task item for the fixed moment, the regular task item being a task item for the household appliance to perform the regular task when the fixed moment arrives again.

## Description

### TECHNICAL FIELD

The present invention relates to the field of computer technologies and, more particularly, to a method and a device for setting a task.

### BACKGROUND

Such household appliance (i.e. device) as an air conditioner, an air purifier or a water dispenser is one of the common household appliances for each family.

During the process of using the household appliance, a user may operate the household appliance to make the household appliance perform corresponding tasks. For instance, the user is used to drink a cup of hot water before sleep, then the user may turn on the water dispenser to boil water.

In the process of achieving the present invention, it is found that the related art at least has the following defects: when the user forgets to operate the household appliance due to some affairs, the household appliance will not perform any task; therefore, this causes a problem that the household appliance cannot provide services for the user in time.

### SUMMARY

In order to solve the problem in the related art that the household appliance cannot provide services for the user in time, the present invention provides a method and a device for setting a task. The technical solutions are as follows.

According to a first aspect of embodiments of the present invention, there is provided a method for setting a task, including:
acquiring a history operation record of a user for operating a household appliance;
detecting whether a regular task exists according to the history operation record, the regular task being a task corresponding to an operation which has been received at a fixed moment for more than a predetermined number of times; and
if the regular task exists, setting a corresponding regular task item for the fixed moment, the regular task item being a task item for the household appliance to perform the regular task when the fixed moment arrives again.

In an embodiment, setting the corresponding regular task item for the fixed moment includes:
sending first query information to a mobile terminal, the first query information being configured to query whether to set the corresponding regular task item for the fixed moment;
receiving first feedback information sent by the mobile terminal; and
when the first feedback information represents confirmation, setting the corresponding regular task item for the fixed moment.

In an embodiment, the method further includes:
performing the regular task according to the regular task item when the fixed moment arrives again.

In an embodiment, performing the regular task according to the regular task item when the fixed moment arrives again includes:
detecting whether the household appliance has already performed the regular task when the fixed moment arrives again; and
performing the regular task if the household appliance does not perform the regular task.

In an embodiment, performing the regular task according to the regular task item when the fixed moment arrives again includes:
when the fixed moment arrives again, sending second query information to the mobile terminal, the second query information being configured to query whether to allow the household appliance performing the regular task;
receiving second feedback information sent by the mobile terminal; and
when the second feedback information represents allowing performing, performing the regular task.

In an embodiment, performing the regular task according to the regular task item when the fixed moment arrives again includes:
when the regular task is stored in the mobile terminal, a household gateway device or a server and when the fixed moment arrives again, sending, by the mobile terminal, the household gateway device or the server, a control instruction of controlling the household appliance to perform the regular task, to the household appliance.

In an embodiment, the method further includes:
acquiring preset information, the preset information including at least one of air quality information of a place in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN (Local Area Network) as that of the household appliance;
detecting whether the preset information satisfies a preset condition, the preset condition including at least one of that the air quality information represents that the air quality is poorer than a preset air quality, the light intensity is less than a preset light intensity, the sound intensity is less than a preset intensity, and the latest moment of using is a moment before a predetermined duration; and
if the preset information satisfies the preset condition, closing the household appliance and other household appliance in the same LAN as that of the household appliance through the household gateway device.

According to a second aspect of the present invention, there is provided a device for setting a task, including:
an operation record acquisition module configured to acquire a history operation record of a user for operating a household appliance;
a task detection module configured to detect whether a regular task exists according to the history operation record acquired by the operation record acquisition module, the regular task being a task corresponding to an operation which has been received at a fixed moment for more than a predetermined number of times; and
a task item setting module configured to, when the detection result of the task detection module is that the regular task exists, set a corresponding regular task item for the fixed moment, the regular task item being a task item for the household appliance to perform the regular task when the fixed moment arrives again.

Optionally, the task item setting module includes:
a first query information sending submodule configured to sent first query information to a mobile terminal, the first query information being configured to query whether to set the corresponding regular task item for the fixed moment;
a first feedback information receiving submodule configured to receive first feedback information sent by the mobile terminal; and
a task item setting submodule configured to, when the first feedback information received by the first feedback information receiving submodule represents confirmation, set the corresponding regular task item for the fixed moment.

Optionally, the device further includes:
a task performing module configured to perform the regular task according to the regular task item when the fixed moment arrives again.

Optionally, the task performing module includes:
a task detection submodule configured to detect whether the household appliance has already performed the regular task when the fixed moment arrives again; and
a first task performing submodule configured to perform the regular task when the detection result of the task detection submodule is that the household appliance does not perform the regular task.

Optionally, the task performing module includes:
a second query information sending submodule configured to, when the fixed moment arrives again, send second query information to the mobile terminal, the second query information being configured to query whether to allow the household appliance performing the regular task;
a second feedback information receiving submodule configured to receive second feedback information sent by the mobile terminal; and
a second task performing submodule configured to, when the second feedback information received by the second feedback information receiving submodule represents allowing performing, perform the regular task.

Optionally, the task performing module is configured to, when the regular task is stored in the mobile terminal, a household gateway device or a server and when the fixed moment arrives again, send, by the mobile terminal, the household gateway device or the server, a control instruction of controlling the household appliance to perform the regular task, to the household appliance.

Optionally, the device further includes:
an information acquisition module configured to acquire preset information, the preset information including at least one of air quality information of a place in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN as that of the household appliance;
a condition detection module configured to detect whether the preset information satisfies a preset condition, the preset condition including at least one of that the air quality information represents that the air quality is poorer than a preset air quality, the light intensity is less than a preset light intensity, the sound intensity is less than a preset intensity, and the latest moment of using is a moment before a predetermined duration; and
a device closing module configured to, when the detection result of the condition detection module is that the preset information satisfies the preset condition, close the household appliance and other household appliance in the same LAN as that of the household appliance through the household gateway device.

According to a third aspect of embodiments of the present invention, there is provided a device for setting a task, including:
a processor; and
a memory for storing instructions executable by the processor;
wherein the processor is configured to:
   acquire a history operation record of a user for operating a household appliance;
   detect whether a regular task exists according to the history operation record, the regular task being a task corresponding to an operation which has been received at a fixed moment for more than a predetermined number of times; and
   if the regular task exists, set a corresponding regular task item for the fixed moment, the regular task item being a task item for the household appliance to perform the regular task when the fixed moment arrives again.

The present invention also provides a computer program, which when executing on a processor of a device, performs the above method.

The technical solutions provided by the embodiments of the present invention may include the following advantageous effects:
through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the present invention solves the problem in the related art that the household appliance may not provide services for the user in time; and achieves the effects that the household appliance may perform the regular task when the fixed moment arrives, so that the household appliance can always provide services required by the user.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an implementation environment related to a method for setting a task, according to some exemplary embodiments.
Fig. 2 is a flow chart of a method for setting a task, according to an exemplary embodiment.
Fig. 3A is a flow chart of a method for setting a task, according to another exemplary embodiment.
Fig. 3B is a display schematic diagram of a mobile terminal for displaying first query information, according to an exemplary embodiment.
Fig. 3C is a display schematic diagram of a mobile terminal for displaying second query information, according to an exemplary embodiment.
Fig. 3D is a display schematic diagram of a mobile terminal when sending a trigger signal to a household appliance, according to an exemplary embodiment.
Fig. 3E is a display schematic diagram of a mobile terminal before feeding back the first feedback information to a mobile household appliance, according to an exemplary embodiment.
Fig. 4 is a flow chart of a method for setting a task, according to another exemplary embodiment.
Fig. 5 is a flow chart of a method for setting a task, according to another exemplary embodiment.
Fig. 6 is a block diagram of a device for setting a task, according to an exemplary embodiment.
Fig. 7 is a block diagram of a device for setting a task, according to another exemplary embodiment.
Fig. 8 is a block diagram of a device for setting a task, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

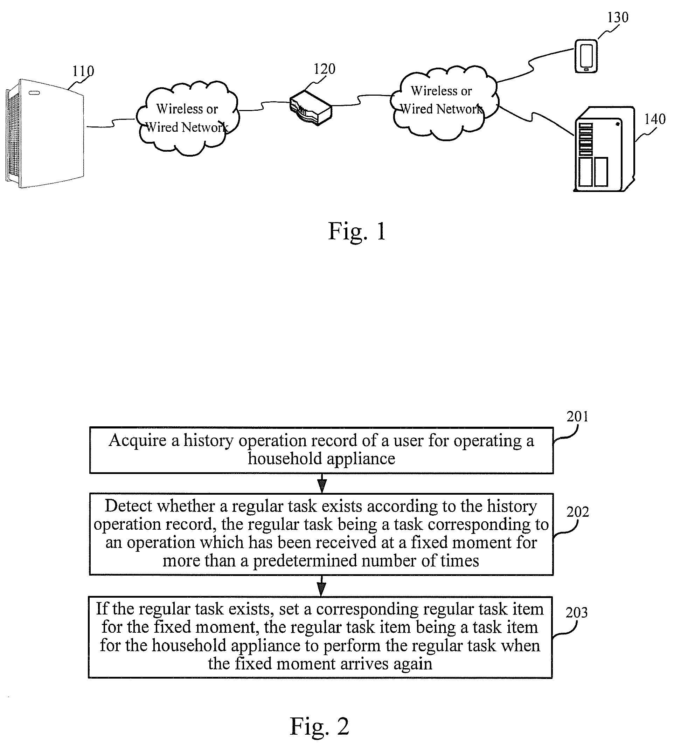

Fig. 1 shows a structural schematic diagram of an implementation environment related to each exemplary embodiment of the present invention. As shown in Fig. 1, the implementation environment may include: a household appliance 110, a household gateway device 120, a mobile terminal 130 and a server 140.

The household appliance 110 may be connected with the household gateway device 120 through a wired or wireless network (e.g. wired or wireless communication network), and implement connection with the mobile terminal 130 and the server 140 through the household gateway device 120. During actual implementations, the household appliance 110 may be an air purifier, an air quality detector, a water dispenser or an air conditioner. The household gateway device 120 may be a router.

A client is installed in the mobile terminal 130, wherein the client is provided by a service provider, and a user may control the household appliance 110 through the client. During actual implementation, when the mobile terminal 130 and the household appliance 110 are in the same LAN, the mobile terminal 130 may search the household appliance 110 through the household gateway device 120, so as to establish a binding relationship with the household appliance 110. The household appliance 110 may establish a binding relationship with one or more mobile terminals 130.

The server 140 is a background server provided by the service provider, which is configured to be combined with the client in the mobile terminal 130 so as to provide the user with the service provided by the service provider.

Fig. 2 is a flow chart of a method for setting a task, according to an exemplary embodiment. In the embodiment, the method for setting a task is applied in an implementation environment as shown in Fig. 1 for illustration. As shown in Fig. 2, the method for setting a task may include the following steps.

In step 201, a history operation record of a user for operating a household appliance is acquired.

In step 202, whether a regular task exists is detected according to the history operation record, the regular task being a task corresponding to an operation which has been received at a fixed moment for more than a predetermined number of times.

In step 203, if the regular task exists, a corresponding regular task item is set for the fixed moment, the regular task item being a task item for the household appliance to perform the regular task when the fixed moment arrives again.

In conclusion, through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the method for setting a task provided by the present invention solves the problem in the related art that the household appliance may not provide services for the user in time; and achieves the effects that the household appliance may perform the regular task when the fixed moment arrives, so that the household appliance can always provide services required by the user.

The method for setting a task disclosed in the foregoing embodiments may either be used in the household appliance 110 as shown in Fig. 1, or used in the household gateway device 120 or the mobile terminal 130 or the server 140, and the implementation manners of the household gateway device 120 and the server 140 are similar; therefore, the following descriptions will introduce the method for setting a task which is applied in the household appliance 110, the household gateway device 120 and the mobile terminal 130 respectively in three embodiments.

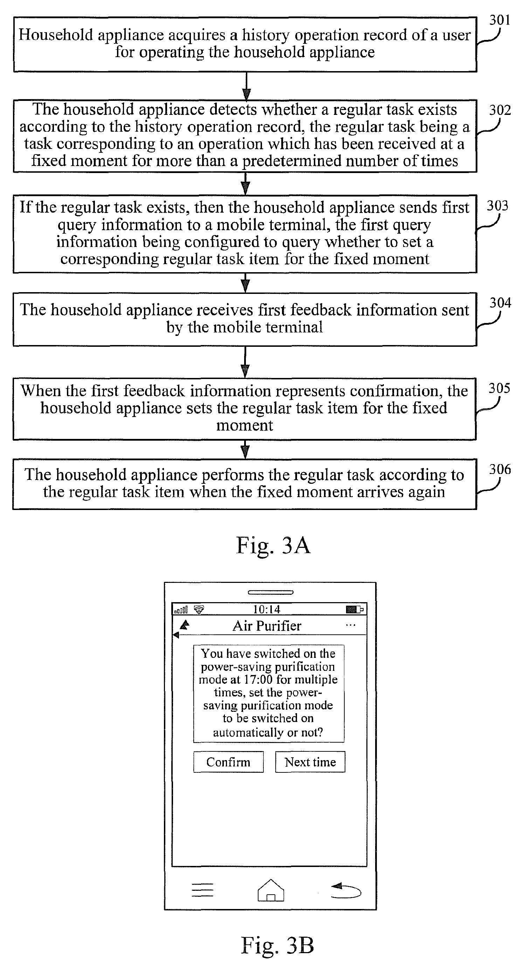

Fig. 3A is a flow chart of a method for setting a task, according to an exemplary embodiment. In the embodiment, the method for setting a task is applied in the household appliance 110 as shown in Fig. 1 for illustration. As shown in Fig. 3A, the method for setting a task may include the following steps.

In step 301, a household appliance acquires a history operation record of a user for operating the household appliance.

When the user operates the household appliance, the household appliance may record and store the operation record of the user, wherein the operation record may include an operation time and an operation type.

For instance, taking the household appliance as an air purifier for example, when the user operates the air purifier to switch on a power-saving purification mode at "17:00", the operation record recorded by the air purifier includes the operating time (17:00) and the operation type (switching on the power-saving purification mode).

Thereafter, when the household appliance needs to use each operation record, the household appliance may directly read the history operation record stored locally.

In step 302, the household appliance detects whether a regular task exists according to the history operation record, the regular task being a task corresponding to an operation which has been received at a fixed moment for more than a predetermined number of times.

The method for the household appliance to detect whether the regular task exists according to the history operation record may include in particular the following embodiments.

According to a first embodiment, the household appliance analyzes the acquired history operation record, and detects whether the regular task exists according to the analysis result.

The household appliance may directly analyze the acquired history operation record, detect whether an operation which has been received at a fixed moment for more than a predetermined number of times exists in the analysis result, and then determine the task corresponding to the operation as the regular task if the detection result shows that the operation exists.

The household appliance may analyze the history operation record within a unit time period, counts the number of times of the same operation received within the unit time period, and detect whether the counted number of times reaches the predetermined number of times. If the detection result shows that the number of times reaches the predetermined number of times, then the household appliance may determine the task corresponding to the operation as the regular task. The unit time period may be one day, one week, one month, two month, and the like.

For instance, taking the predetermined number of times being four times and the unit time period being one week for example, the household appliance, after analyzing each history operation record, finds that the user switches on the power-saving purification mode of the air purifier at "17:00" in five days within the past week, then the household appliance may detect and obtain that the number of times of switching on the air purifier received at 17:00 reaches the predetermined number of times (four times). At this moment, the household appliance may determine the task of switching on the power-saving purification mode of the air purifier at 17:00 as the regular task.

Similarly, if an operation record of closing the air purifier at 20:00 in every day exists in the operation record, then the household appliance may also determine the task of closing the air purifier at 20:00 in every day as the regular task.

According to a second embodiment, the household appliance sends the history operation record to the server; the server analyzes the history operation record, feeds back an analysis result to the household appliance, and the household appliance detects whether the regular task exists according to the received analysis result.

In a variant, the household appliance may also send the history operation record to the server. The server receives the history operation record, analyzes the history operation record, and feeds back an analysis result to the household appliance. Accordingly, the household appliance receives the analysis result fed back by the server, and detects whether the regular task exists according to the analysis result. This is similar to the foregoing implementation manner, which will not be elaborated herein in the embodiment.

In step 303, if the regular task exists, then the household appliance sends first query information to a mobile terminal, the first query information being configured to query whether to set a corresponding regular task item for the fixed moment.

If the detection result of the household appliance is that the regular task exists, then the household appliance may send the first query information to the mobile terminal, wherein the first query information is configured to query whether to set the corresponding regular task item for the fixed moment.

Accordingly, the mobile terminal may receive the first query information, and display the received first query information.

After viewing the first query information displayed by the mobile terminal, the user may make a response, and operate the mobile terminal to send first feedback information to the household appliance. For instance, when the user agrees to set the regular task item for the fixed moment, the user may operate the mobile terminal to feed back feedback information representing confirmation to the household appliance; while when the user disagrees to set the regular task item for the fixed moment, the user may operate the mobile terminal to feed back feedback information representing rejection to the household appliance.

For instance, referring to Fig. 3B, the mobile terminal may display the first query information with the content of "You has switched on the power-saving purification mode at 17:00 for multiple times, set the power-saving purification mode to be switched on automatically or not?". When the user agrees to set, the user may click "confirm"; and when the user disagrees to set, the user may click "next time", and so on.

In step 304, the household appliance receives first feedback information sent by the mobile terminal.

The household appliance may correspondingly receive the first feedback information sent by the mobile terminal.

In step 305, when the first feedback information represents confirmation, the household appliance sets the regular task item for the fixed moment.

If the first feedback information received by the household appliance represents confirmation, then the household appliance may set the regular task item for the fixed moment, wherein the regular task item is a task item for performing the regular task when the fixed moment arrives again.

If the first feedback information received by the household appliance represents rejection, then the household appliance may end the flow.

In step 306, the household appliance performs the regular task according to the regular task item when the fixed moment arrives again.

After the household appliance sets the regular task item for the fixed moment, the household appliance may perform the regular task according to the regular task item set in advance when the fixed moment arrives again.

Two implementation manners may be envisaged for the household appliance to perform the regular task according to the regular task item.

In a first implementation manner, the step may include the following operations.

Firstly, the household appliance is detecting whether it has already performed the regular task when the fixed moment arrives again.

The household appliance may detect whether the household appliance has already performed the regular task when the fixed moment arrives again.

In the embodiment, whether the household appliance has already performed the regular task includes that the household appliance has completely performed the regular task and/or the household appliance is performing the regular task.

Secondly, the regular task is performed if the household appliance does not perform the regular task.

If the household appliance does not perform the regular task, then the household appliance may perform the regular task.

If the household appliance has already performed the regular task, then the household appliance may end this flow, and so on.

In a second implementation manner, the step may include the following operations.

Firstly, when the fixed moment arrives again, second query information is sent to the mobile terminal, the second query information being configured to query whether to allow the household appliance performing the regular task.

In a variant, when the fixed moment arrives, the household appliance may send the second query information to the mobile terminal, wherein the second query information is configured to query whether to allow the household appliance performing the regular task.

The mobile terminal may correspondingly receive the second query information, and display the received second query information. Afterwards, when the user agrees the household appliance to perform the regular task, the user may operate the mobile terminal to send second feedback information representing allowance of performing to the household appliance; and when the user disagrees the household appliance to perform the regular task, the user may operate the mobile terminal to send second feedback information representing disallowance of performing to the household appliance.

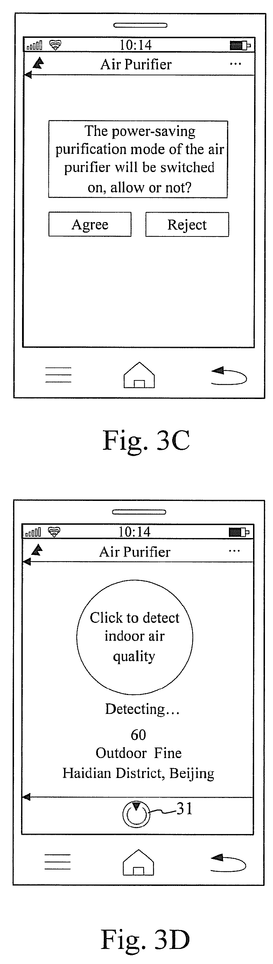

For instance, the second query information sent by the air purifier is "the air purifier will switch on the power-saving purification mode, yes or no?", then the mobile terminal may display an interface as shown in Fig. 3C. Afterwards, when the user agrees to switch on, the user may click "Agree"; and when the user disagrees to set, the user may click "Reject".

Secondly, the second feedback information sent by the mobile terminal is received.

The household appliance may correspondingly receive the second feedback information sent by the mobile terminal.

Thirdly, when the second feedback information represents allowance of performing, the regular task is performed.

When the second feedback information received by the household appliance represents information of allowing performing, it indicates that the user allows the household appliance performing the regular task, then the household appliance may perform the regular task.

On the contrary, when the second feedback information received by the household appliance represents information of disallowing performing, it indicates that the user does not want the household appliance to perform the regular task, then the household appliance may not perform the regular task and end this flow.

One point to note is that the embodiment only takes using the foregoing possible implementation manners separately to perform the regular task as an example. In an embodiment, the household appliance may use the foregoing two implementation manners at the same time, or the household appliance automatically performs the regular task when the fixed moment arrives, and so on.

Another point to note is that before step 303, the household appliance may receive a trigger signal sent by the mobile terminal, wherein the trigger signal may be a signal sent when the user turns on the household appliance through the client in the mobile terminal.

For instance, referring to Fig. 3D, when the user clicks a start-up control 31 in Fig. 3D, the mobile terminal may send a trigger signal to the household appliance. Afterwards, the household appliance, after performing the step 301 and the step 302, sends the first query information to the mobile terminal. That is, the mobile terminal may correspondingly display the interface as shown in Fig. 3B, and so on.

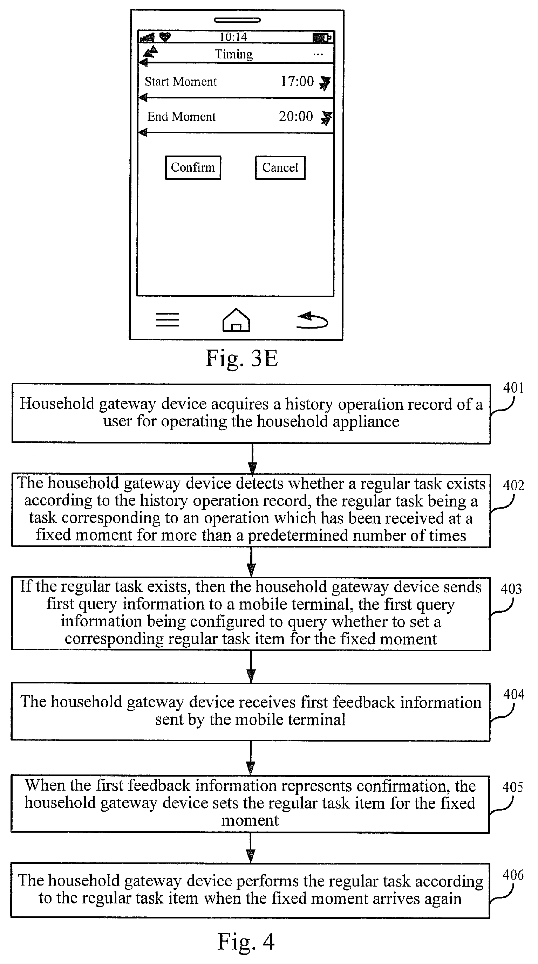

Still another point to note is that when the regular task detected and obtained by the household appliance is a task within a fixed time period, for instance, the regular task is "switch on the power-saving purification mode between 17:00 and 20:00", then after the mobile terminal displays a display interface as shown Fig. 3B and receives a confirmation signal applied by the user, the mobile terminal may jump to a display interface as shown in Fig. 3E. The user sets a time period corresponding to the regular task in the display interface, and sends the first feedback information to the household appliance after completing setting the time period, which will not be defined in the embodiment.

In conclusion, through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the method for setting a task provided by the present invention solves the problem in the related art that the household appliance may not provide services for the user in time; and achieves the effects that the household appliance may perform the regular task when the fixed moment arrives, so that the household appliance can always provide services required by the user.

According to the embodiment, the first query information is sent to the mobile terminal, and only when the received feedback information represents confirmation, i.e., the user agrees to set the regular task item for the fixed moment, the household appliance may set the regular task item for the fixed moment; therefore, the operation of the household appliance is more aligned with the expectation of the user, thus improving the user experience.

Meanwhile, after setting the regular task item, when the fixed moment arrives again, the household appliance may perform the regular task according to the regular task item, thus solving the problem in the related art that when the user forgets to operate the household appliance, the household appliance will not perform any task.

Furthermore, according to the embodiment, before performing the regular task, the user is queried whether to allow performing, and only when the user allows performing, the regular task is performed, thus further improving the user experience.

It should be additionally noted that in the foregoing embodiments, the method for setting a task may also include the following operations.

Firstly, the household appliance acquires preset information, the preset information including at least one of air quality information of a place (circumstance) in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN as that of the household appliance.

When the preset information includes the air quality information, if the household appliance is a device that possesses the capability of detecting the air quality (for instance, an air purifier or an air quality detector), then the household appliance may directly detect the air quality of the place in which the household appliance is located, and acquire the air quality information; and if the household appliance is a device that does not possess the capability of detecting the air quality, the household appliance may acquire the air quality information from other device that possesses the capability of detecting the air quality in the same LAN through a household gateway device.

When the preset information includes the light intensity of the place in which the household appliance is located within the first predetermined time period, if the household appliance possesses the capability of collecting light intensity, then the household appliance may collect the light intensity of the place in which the household appliance is located within the first predetermined time period, and store the acquired light intensity. When the light intensity needs to be used later, the stored light intensity may be read. For instance, the household appliance directly collects the light intensity of the place in which the household appliance is located at "17:00-20:00". If the household appliance does not possess the capability of collecting the light intensity, the household appliance may acquire, through the household gateway device, the light intensity of the place in which the household appliance is located from other household appliance that possesses the capability of collecting the light intensity and is connected with the household gateway device, wherein the light intensity is collected in advance by other household appliance that possesses the capability of collecting the light intensity, which will not be defined in the embodiment.

When the preset information includes the sound intensity of the place in which the household appliance is located within a second predetermined time period, if the household appliance possesses the capability of collecting the sound intensity, the household appliance may directly collect the sound intensity of the place in which the household appliance is located within the second predetermined time, for instance, collect the sound intensity of the place in which the household appliance is located between "19:30 and 21:30". If the household appliance does not possess the capability of collecting the sound intensity, the household appliance may acquire, through the household gateway device, the sound intensity of the place in which the household appliance is located from other household appliance that possesses the capability of collecting the sound intensity and is connected with the household gateway device, wherein the sound intensity is collected in advance by other household appliance that possesses the capability of collecting the sound intensity, which will not be defined in the embodiment. The second predetermined time period and the first predetermined time period may either be identical time period, or be different time periods, which will not be defined in the embodiment.

When the preset information includes the latest moment of using the household appliance and/or other household appliance in the same LAN as that of the household appliance, the household appliance may acquire the latest moment of using itself. Or, the latest moment of using other household appliance in the same LAN as that of the household appliance is acquired through the household gateway device. Or, the household appliance may acquire the latest moment of using itself and the latest moment of using other household appliance in the same LAN as that of the household appliance.

Secondly, the household appliance detects whether the preset information satisfies a preset condition, the preset condition including at least one of that the air quality information represents that the air quality is poorer than a preset air quality, the light intensity is less than a preset light intensity, the sound intensity is less than a preset intensity, and the latest moment of using is a moment before a predetermined duration.

After the household appliance acquires the preset information, the household appliance may detect whether the preset information satisfies the preset condition.

When the preset information includes the air quality information, the household appliance may detect whether the air quality represented by the air quality information is poorer than the preset air quality. When the detection result shows that the air quality is poorer than the preset air quality, the household appliance may know that the place in which the household appliance is located is not swept for a long time, and the user may not be at home for a long time; and the preset information satisfies the corresponding condition. However, if the detection result shows that the air quality is not poorer than the preset air quality, it indicates that the surrounding air quality is better, and the user may frequently sweep; and the preset information does not satisfy the corresponding condition.

When the preset information includes the light intensity of the place in which the household appliance is located within the first predetermined time period, the household appliance may detect whether the acquired light intensity is less than the preset light intensity. When the first predetermined time period is a certain time period at night, and the detection result shows that the light intensity is less than the preset light intensity, it indicates that the user may possibly not turn on such a lighting household appliance as an electric lamp or TV within the first predetermined time period; at this moment, the user may possibly not return home, and the preset information satisfies the corresponding condition. When the detection result shows that the light intensity is not less than the preset light intensity, it indicates that the user normally turns on the lighting household appliance within the first predetermined time period; that is, the user may possibly return home, and the preset information does not satisfy the corresponding condition.

When the preset information includes the sound intensity of the place in which the household appliance is located within the second predetermined time period, the household appliance may detect whether the acquired sound intensity is less than the preset intensity. When the second predetermined time period is a certain time period at night, and the detection result shows that the sound intensity is less than the preset intensity, it indicates that the user may possibly not return home, and the preset information satisfies the corresponding condition. When the detection result shows that the sound intensity is not less than the preset intensity, it indicates that the user may possibly return home within the second predetermined time period, and the preset information does not satisfy the corresponding condition.

When the preset information includes the latest usage moment of being used, the household appliance may detect whether the usage moment is a moment before the predetermined duration. When the detection result shows that the usage moment is a moment before the predetermined duration, then the household appliance may know that the household appliance has not be used for a long time, and the user may possibly not return home for a long time; and the preset information satisfies the corresponding condition. If the detection result shows that the usage moment is not a moment before the predetermined duration, it indicates that the household electrical appliance has been used recently, i.e., the user normally uses the household appliance; and the preset information does not satisfy the corresponding condition.

It should be illustrated that the embodiment only takes the preset information including the foregoing four types as an example. During actual implementation, the preset information may also include other information, and so on. Moreover, when the preset information includes two or more than two types of information, it may set that only when the two or more than two types of information satisfy the corresponding condition at the same time, the preset information satisfies the preset condition. Or, it is determined that the preset information satisfies the preset condition when the number of the two or more than two of the information satisfying the corresponding condition reaches a predetermined number.

Thirdly, if the preset information satisfies the preset condition, then the household appliance closes the household appliance and other household appliance in the same LAN as that of the household appliance through the household gateway device.

If the detection result of the household appliance is that the preset information satisfies the preset condition, then it indicates that the user may possibly go out for a long time; at this moment, for power utilization security and energy conservation, the household appliance may close the household appliance and other household appliance in the same LAN as that of the household appliance through the household gateway device.

During actual implementation, before the household appliance closes itself and other household appliance in the same LAN as that of the household appliance, the household appliance may also send third query information to the mobile terminal through the household gateway device, the third query information being configured to query whether to close the household appliance and other household appliance in the same LAN as that of the household appliance; when the feedback information sent by the mobile terminal represents allowance of closing, each household appliance is closed. In this way, the operation of each household appliance is more suitable to the using habit of the user, thus improving the user experience.

Fig. 4 is a flow chart of a method for setting a task, according to an exemplary embodiment. In the embodiment, the method for setting a task is applied in the household gateway device 120 as shown in Fig. 1 for illustration. As shown in Fig. 4, the method for setting a task may include the following steps.

In step 401, a household gateway device acquires a history operation record of a user for operating the household appliance.

When the user operates the household appliance, the household appliance may record the operation record of the user and store the recorded operation record; or, store the recorded operation record into the household gateway device; or, send the operation record to a mobile terminal through the household gateway device; or, send the operation record to a server through the household gateway device.

Afterwards, when the household gateway device needs to use the history operation record, the household gateway device may acquire the history operation record.

The household gateway device may acquire the history operation record according to at least one of the following manners.

The first manner is that when the history operation record is stored in the household gateway device, the household gateway device may directly read the pre-stored history operation record.

The second manner is that when the history operation record is stored in the household appliance, the household gateway device may send a first acquisition request of acquiring the history operation record to the household appliance; and the household appliance sends the history operation record to the household gateway device after receiving the first acquisition request.

The third manner is that when the history operation record is stored in the server, the household gateway device may send a second acquisition request of acquiring the history operation record to the server; and the server sends the history operation record to the household gateway device after receiving the second acquisition request.

In step 402, the household gateway device detects whether a regular task exists according to the history operation record, the regular task being a task corresponding to an operation which has been received at a fixed moment for more than a predetermined number of times.

After acquiring the history operation record, the household gateway device may detect whether the regular task exists according to the history operation record. This is similar to the detection manner of the household appliance for detecting whether the regular task exists, which will not be elaborated herein in the embodiment.

In step 403, if the regular task exists, then the household gateway device sends first query information to the mobile terminal, the first query information being configured to query whether to set a corresponding regular task item for the fixed moment.

If the detection result of the household gateway device is that the regular task exists, then the household gateway device may send the first query information to the mobile terminal, wherein the first query information is configured to query whether to set the corresponding regular task item for the fixed moment.

Accordingly, the mobile terminal may receive the first query information, and display the received first query information.

After viewing the first query information displayed by the mobile terminal, the user may make a response, and operate the mobile terminal to send first feedback information to the household gateway device. When the user agrees to set the regular task item for the fixed moment, the user may operate the mobile terminal to feed back feedback information that represents confirmation to the household gateway device; and when the user does not agree to set the regular task item for the fixed moment, the user may operate the mobile terminal to feed back feedback information that represents rejection to the household gateway device.

This is similar to the step 303 in the foregoing embodiment, which will not be elaborated herein in the embodiment.

In step 404, the household gateway device receives the first feedback information sent by the mobile terminal.

The household gateway device may correspondingly receive the first feedback information sent by the mobile terminal.

In step 405, when the first feedback information represents confirmation, the household gateway device sets the regular task item for the fixed moment.

If the first feedback information received by the household gateway device represents confirmation, then the household gateway device may set the regular task item for the fixed moment, wherein the regular task item is to perform the task item of the regular task when the fixed moment arrives again.

If the first feedback information received by the household gateway device represents rejection, then the household gateway device may end the flow.

In step 406, the household gateway device performs the regular task according to the regular task item when the fixed moment arrives again.

When the fixed moment arrives again, the household gateway device may send a control instruction of controlling the household appliance to perform the regular task to the household appliance. Accordingly, the household appliance may receive the control instruction, and perform the regular task after receiving the control instruction.

It should be illustrated that the present embodiment only takes the household gateway device sending the control instruction to the household appliance when the fixed moment arrives as an example. In a particular embodiment, the household gateway device may also directly send the control instruction carrying the fixed moment to the household appliance without waiting for the arrival of the fixed moment after setting the regular task item, and so on.

In conclusion, through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the method for setting a task provided by the present invention solves the problem in the related art that the household appliance may not provide services for the user in time; and achieves the effects that the household appliance may perform the regular task when the fixed moment arrives, so that the household appliance can always provide services required by the user.

According to the present embodiment, the first query information is sent to the mobile terminal, and only when the received feedback information represents confirmation, i.e., the user agrees to set the regular task item for the fixed moment, the household gateway device may set the regular task item for the fixed moment; therefore, the operation of the household appliance is more aligned with the expectation of the user, thus improving the user experience.

Meanwhile, after setting the regular task item, when the fixed moment arrives again, the household gateway device may control the household appliance to perform the regular task, thus solving the problem in the related art that when the user forgets to operate the household appliance, the household appliance will not perform any task.

It should be additionally noted that in the foregoing embodiment, the method for setting a task may also include the following operations.

Firstly, the household gateway device acquires preset information, the preset information including at least one of air quality information of a place in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN as that of the household appliance.

When the preset information includes the air quality information, the household gateway device may acquire the air quality information from the household appliance that possesses the capability of detecting the air quality and is connected with the household gateway device. The air quality information is information acquired in advance by the household appliance possessing the capability of detecting the air quality.

When the preset information includes the light intensity of the place in which the household appliance is located within the first predetermined time period, the household gateway device may acquire the light intensity of the place in which the household appliance is located within the first predetermined time period from the household appliance that possesses the capability of collecting the light intensity and is connected with the household gateway device. The light intensity is the information collected and stored by the household appliance possessing the capability of collecting the light intensity within the first time period.

When the preset information includes the sound intensity of the place in which the household appliance is located within the second predetermined time period, the household gateway device may acquire the light intensity of the place in which the household appliance is located within the second predetermined time period from the household appliance that possesses the capability of collecting the sound intensity and is connected with the household gateway device. The sound intensity is the information collected and stored by the household appliance possessing the capability of collecting the sound intensity within the second time period. The second predetermined time period and the first predetermined time period may either be identical time period, or different time periods, which will not be defined in the embodiment.

When the preset information includes the latest moment of using the household appliance and/or other household appliance in the same LAN as that of the household appliance, the household gateway device collects the latest moment of using of each household appliance connected with the household gateway device.

Secondly, the household gateway device detects whether the preset information satisfies a preset condition, the preset condition including at least one of that the air quality information represents that the air quality is poorer than a preset air quality, the light intensity is less than a preset light intensity, the sound intensity is less than a preset intensity, and the latest moment of using is a moment before a predetermined duration.

After acquiring the preset information, the household gateway device may detect whether the preset information satisfies the preset condition. This detection method is similar to the corresponding steps in the foregoing embodiment, which will not be elaborated herein in the embodiment.

It should be illustrated that the embodiment only takes the preset information including the foregoing four types as an example. In another embodiment, the preset information may also include other information, which will not be defined in the embodiment. Moreover, when the preset information includes two or more than two types of information, it may set that only when the two or more than two types of information satisfy the corresponding condition at the same time, the preset information satisfies the preset condition. Or, it is determined that the preset information satisfies the preset condition when the number of the two or more than two of the information satisfying the conditions reaches a predetermined number.

Thirdly, if the preset information satisfies the preset condition, then the household gateway device closes the household appliance and other household appliance in the same LAN as that of the household appliance.

If the detection result of the household gateway device shows that the preset information satisfies the preset condition, it indicates that the user may possibly go out; at this moment, for power utilization security and energy conservation, the household gateway device may close each household appliance connected with the household gateway device.

In an embodiment, before closing each household appliance connected with the household gateway device, the household gateway device may also send third query information to the mobile terminal, the third query information being configured to query whether to close each household appliance; if the feedback information sent by the mobile terminal represents to allow closing, then the household gateway device closes each household appliance connected with the household gateway device. In this way, the operation of each household appliance is more suitable to the using habit of the user, thus improving the user experience.

It should be illustrated that when the method is applied in the server, the implementation manner thereof is similar to that of the method applied in the household gateway device; therefore, it will not be elaborated herein in the embodiment.

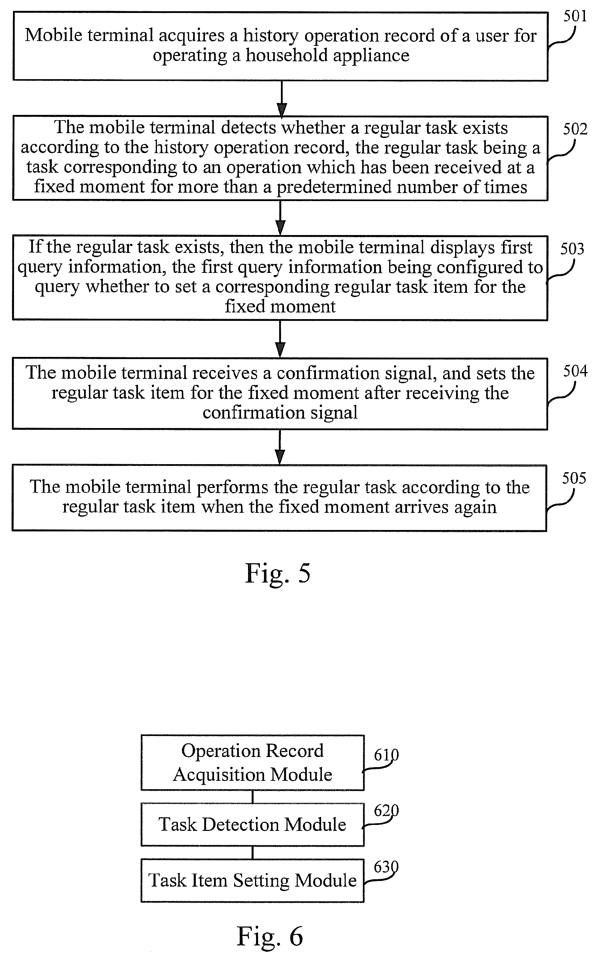

Fig. 5 is a flow chart of a method for setting a task, according to an exemplary embodiment. In the embodiment, the method for setting a task is applied in the mobile terminal 130 as shown in Fig. 1 for illustration. As shown in Fig. 5, the method for setting a task may include the following steps.

In step 501, the mobile terminal acquires a history operation record of a user for operating a household appliance.

When the user operates the household appliance, the household appliance may record the operation record of the user and store the recorded operation record; or, store the recorded operation record into a household gateway device; or, send the operation record to the mobile terminal through the household gateway device; or, send the operation record to a server through the household gateway device.

Afterwards, when the mobile terminal needs to use the history operation record, the mobile terminal may acquire the history operation record.

The mobile terminal may acquire the history operation record according to at least one of the following manners.

The first manner is that when the history operation record is stored in the mobile terminal, the mobile terminal may directly read the pre-stored history operation record.

The second manner is that when the history operation record is stored in the household appliance, the mobile terminal sends a third acquisition request of acquiring the history operation record to the household appliance; and the household appliance sends the history operation record to the mobile terminal after receiving the third acquisition request.

The third manner is that when the history operation record is stored in the server, the mobile terminal sends a fourth acquisition request of acquiring the history operation record to the server; and the server forwards the history operation record to the mobile terminal after receiving the fourth acquisition request.

The fourth manner is that when the history operation record is stored in the household gateway device, the mobile terminal sends a fifth acquisition request of acquiring the history operation record to the household gateway device; and the household gateway device forwards the history operation record to the mobile terminal after receiving the fifth acquisition request.

In step 502, the mobile terminal detects whether a regular task exists according to the history operation record, the regular task being a task corresponding to an operation which has been received at a fixed moment for more than a predetermined number of times.

After acquiring the history operation record, the mobile terminal may detect whether a regular task exists according to the history operation record. This step is similar to the step 302 in the embodiment, which will not be elaborated herein in the embodiment.

In step 503, if the regular task exists, then the mobile terminal displays first query information, the first query information being configured to query whether to set a corresponding regular task item for the fixed moment.

Different from the above-mentioned embodiments, in the present embodiment, since the method is applied in the mobile terminal, the mobile terminal may directly display the first query information when the detection result of the mobile terminal shows that the regular task exists, wherein the first query information is configured to query whether to set the corresponding regular task item for the fixed moment.

In step 504, the mobile terminal receives a confirmation signal, and sets the regular task item for the fixed moment after receiving the confirmation signal.

When the user views the first query information displayed by the mobile terminal and agrees to set the regular task item, the user may apply a confirmation signal. Accordingly, the mobile terminal receives the confirmation signal.

After the mobile terminal receives the confirmation signal, the mobile terminal may set the regular task item for the fixed moment.

When the user rejects to set the regular task item, the user may apply a rejection signal. Accordingly, the mobile terminal receives the rejection signal, and ends the flow after receiving the rejection signal.

In step 505, the mobile terminal performs the regular task according to the regular task item when the fixed moment arrives again.

After the mobile terminal sets the corresponding regular task item for the fixed moment, when the fixed moment arrives again, the mobile terminal may send a control instruction of controlling the household appliance to perform the regular task to the household appliance. Accordingly, the household appliance may receive the control instruction, and perform the regular task after receiving the control instruction.

It should be illustrated that the present embodiment only takes the mobile terminal sending the control instruction to the household appliance when the fixed moment arrives as an example. In another embodiment, the mobile terminal may also directly send the control instruction carrying the fixed moment to the household appliance without waiting for the arrival of the fixed moment after setting the regular task item, which will not be defined in the embodiment.

In conclusion, through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the method for setting a task provided by the present invention solves the problem in the related art that the household appliance may not provide services for the user in time; and achieves the effects that the household appliance may perform the regular task when the fixed moment arrives, so that the household appliance can always provide services required by the user.

According to the present embodiment, before setting the corresponding regular task item for the fixed moment, a query about whether to set the corresponding regular task item for the fixed moment is displayed, and after a confirmation signal is received, the corresponding regular task item for the fixed moment is set. Therefore, the operation of the household appliance is more suitable to the using habit of the user, thus improving the user experience.

Meanwhile, after setting the regular task item, when the fixed moment arrives again, the mobile terminal may control the household appliance to perform the regular task, thus solving the problem in the related art that when the user forgets to operate the household appliance, the household appliance will not perform any task.

It should be additionally noted that in the foregoing embodiment, the method for setting a task may also include the following steps.

Firstly, the mobile terminal acquires preset information, the preset information including at least one of air quality information of a place in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN as that of the household appliance.

When the preset information includes the air quality information, the mobile terminal may acquire the air quality information from the household appliance that possesses the capability of detecting the air quality and is connected with the household gateway device through a household gateway device.

When the preset information includes the light intensity of the place in which the household appliance is located within the first predetermined time period, since the household appliance possessing the capability of collecting the light intensity may collect the light intensity of the place in which the household appliance is located within the first predetermined time period, the mobile terminal may collect the light intensity of the place in which the household appliance is located within the first predetermined time period from the household appliance that possesses the capability of collecting the light intensity and is connected with the household gateway device through the household gateway device.

When the preset information includes the sound intensity of the place in which the household appliance is located within the second predetermined time period, since the household appliance possessing the capability of collecting the sound intensity may collect the sound intensity of the place in which the household appliance is located within the second predetermined time period, the mobile terminal may collect the sound intensity of the place in which the household appliance is located within the second predetermined time period from the household appliance that possesses the capability of collecting the sound intensity and is connected with the household gateway device through the household gateway device. The second predetermined time period and the first predetermined time period may either be identical time period, or different time periods, which will not be defined in the embodiment.

When the preset information includes the latest moment of using the household appliance and/or other household appliance in the same LAN as that of the household appliance, the mobile terminal may collect the latest moment of using of each household appliance connected with the household gateway device through the household gateway device.

Secondly, the mobile terminal detects whether the preset information satisfies a preset condition, the preset condition including at least one of that the air quality information represents that the air quality is poorer than a preset air quality, the light intensity is less than a preset light intensity, the sound intensity is less than a preset intensity, and the latest moment of using is a moment before a predetermined duration.

This is similar to the corresponding steps in the foregoing embodiment, which will not be elaborated herein in the embodiment.

It should be illustrated that the embodiment only takes the preset information including the foregoing four types as an example. During actual implementation, the preset information may also include other information, which will not be defined in the embodiment. Moreover, when the preset information includes two or more than two types of information, it may set that only when the two or more than two types of information satisfy the corresponding condition at the same time, the preset information satisfies the preset condition. Or, it is determined that the preset information satisfies the preset condition when the number of the two or more than two of the information satisfying the conditions reaches a predetermined number.

Thirdly, if the preset information satisfies the preset condition, then the mobile terminal closes the household appliance and other household appliance in the same LAN as that of the household appliance through the household gateway device.

If the detection result of the mobile terminal shows that the preset information satisfies the preset condition, it indicates that the user may possibly go out; at this moment, for power utilization security and energy conservation, the mobile terminal may close each household appliance connected with the household gateway device through the household gateway device.

In an embodiment, before closing each household appliance connected with the household gateway device through the household gateway device, the mobile terminal may also display third query information, the third query information being configured to query whether to close each household appliance; if the mobile terminal receives a confirmation signal, then each household appliance is closed; otherwise, the household appliance is not closed. In this way, the operation of each household appliance is more suitable to the using habit of the user, thus improving the user experience.

Embodiments of devices of the present invention are described hereinafter, which may be used for performing embodiments of methods of the present invention. For the details not described in the embodiments of devices of the present invention, please refer to the embodiments of methods of the present invention.

Fig. 6 is a block diagram of a device for setting a task, according to an exemplary embodiment. As shown in Fig. 6, the device for setting a task may include, but is not limited to: an operation record acquisition module 610, a task detection module 620 and a task item setting module 630.

The operation record acquisition module 610 is configured to acquire a history operation record of a user for operating a household appliance.

The task detection module 620 is configured to detect whether a regular task exists according to the history operation record acquired by the operation record acquisition module 610, the regular task being a task corresponding to an operation which has been received at a fixed moment for more than a predetermined number of times.

The task item setting module 630 is configured to, when the detection result of the task detection module 620 is that the regular task exists, set a corresponding regular task item for the fixed moment, the regular task item being a task item for the household appliance to perform the regular task when the fixed moment arrives again.

In conclusion, through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the device for setting a task provided by the present invention solves the problem in the related art that the household appliance may not provide services for the user in time; and achieves the effects that the household appliance may perform the regular task when the fixed moment arrives, so that the household appliance can always provide services required by the user.

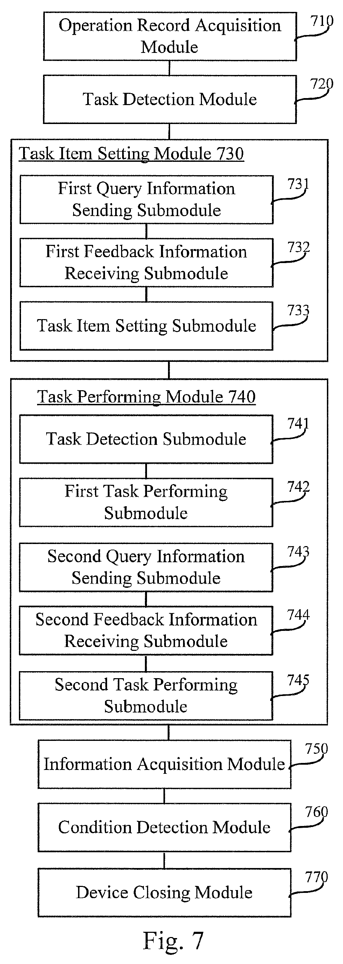

Fig. 7 is a block diagram of a device for setting a task, according to an exemplary embodiment. As shown in Fig. 7, the device for setting a task may include, but is not limited to: an operation record acquisition module 710, a task detection module 720 and a task item setting module 730.

The operation record acquisition module 710 is configured to acquire a history operation record of a user for operating a household appliance.

The task detection module 720 is configured to detect whether a regular task exists according to the history operation record acquired by the operation record acquisition module 710, the regular task being a task corresponding to an operation which has been received at a fixed moment for more than a predetermined number of times.

The task item setting module 730 is configured to, when the detection result of the task detection module 720 is that the regular task exists, set a corresponding regular task item for the fixed moment, the regular task item being a task item for the household appliance to perform the regular task when the fixed moment arrives again.

Optionally, the task item setting module 730 includes:
a first query information sending submodule 731 configured to sent first query information to a mobile terminal, the first query information being configured to query whether to set a corresponding regular task item for the fixed moment;
a first feedback information receiving submodule 732 configured to receive first feedback information sent by the mobile terminal; and
a task item setting submodule 733 configured to, when the first feedback information received by the first feedback information receiving submodule 732 represents confirmation, set the corresponding regular task item for the fixed moment.

Optionally, the device further includes:
a task performing module 740 configured to perform the regular task according to the regular task item when the fixed moment arrives again.

Optionally, the task performing module 740 includes:
a task detection submodule 741 configured to detect whether the household appliance has already performed the regular task when the fixed moment arrives again; and
a first task performing submodule 742 configured to perform the regular task when the detection result of the task detection submodule 741 is that the household appliance does not perform the regular task.

Optionally, the task performing module 740 includes:
a second query information sending submodule 743 configured to, when the fixed moment arrives again, send second query information to the mobile terminal, the second query information being configured to query whether to allow the household appliance performing the regular task;
a second feedback information receiving submodule 744 configured to receive second feedback information sent by the mobile terminal; and
a second task performing submodule 745 configured to, when the second feedback information received by the second feedback information receiving submodule 744 represents allowing performing, perform the regular task.

Optionally, the task performing module 740 is configured to, when the regular task is stored in the mobile terminal, a household gateway device or a server and when the fixed moment arrives again, send a control instruction of controlling the household appliance to perform the regular task by the mobile terminal, the household appliance or the server.

Optionally, the device further includes:
an information acquisition module 750 configured to acquire preset information, the preset information including at least one of air quality information of a place in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN as that of the household appliance;
a condition detection module 760 configured to detect whether the preset information satisfies a preset condition, the preset condition including at least one of that the air quality information represents that the air quality is poorer than a preset air quality, the light intensity is less than a preset light intensity, the sound intensity is less than a preset intensity, and the latest moment of using is a moment before a predetermined duration; and
a device closing module 770 configured to, when the detection result of the condition detection module 760 is that the preset information satisfies the preset condition, close the household appliance and other household appliance in the same LAN as that of the household appliance through the household gateway device.

In conclusion, through acquiring the history operation record of the user for operating the household appliance, detecting whether the regular task exists according to the history operation record, the regular task being the task corresponding to the operation which has been received at a fixed moment for more than a predetermined number of times; and if the regular task exists, setting the corresponding regular task item for the fixed moment, the regular task item being the task item for the household appliance to perform the regular task when the fixed moment arrives again; the device for setting a task provided by the present invention solves the problem in the related art that the household appliance may not provide services for the user in time; and achieves the effects that the household appliance may perform the regular task when the fixed moment arrives, so that the household appliance can always provide services required by the user.

According to the embodiment, the first query information is sent to the mobile terminal, and only when the received feedback information represents confirmation, i.e., the user agrees to set the regular task item for the fixed moment, the household appliance may set the regular task item for the fixed moment; therefore, the operation of the household appliance is more aligned with the expectation of the user, thus improving the user experience.

Meanwhile, after setting the regular task item, when the fixed moment arrives again, the household appliance may perform the regular task, thus solving the problem in the related art that when the user forgets to operate the household appliance, the household appliance will not perform any task.

With respect to the devices in the above embodiments, the specific manners for performing operations for individual modules therein have been described in detail in the embodiments regarding the methods, which will not be elaborated herein.

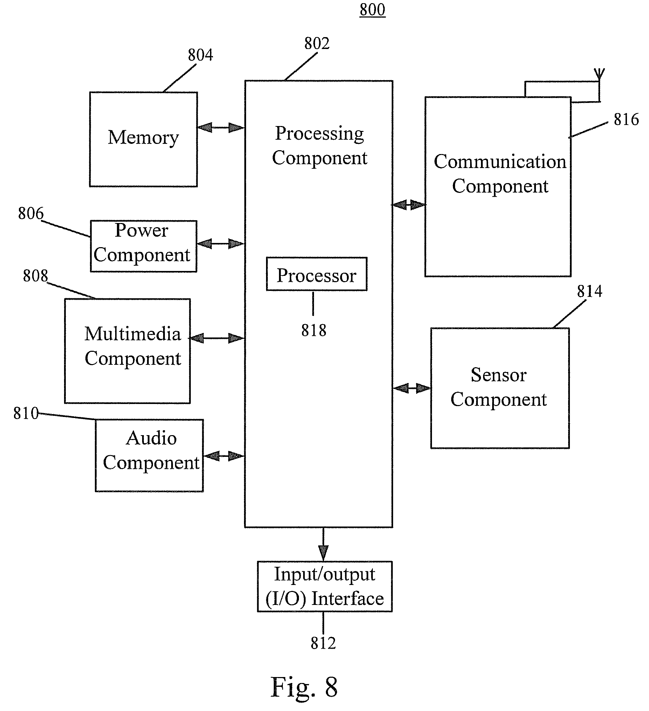

Fig. 8 is a block diagram of a device 800 for setting a task, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 818 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 818 in the device 800, for performing the above-described methods. For example, the non-transitory computer-readable storage medium may be a ROM, a RAM, a CD-ROM, a magnetic tape, a floppy disc, an optical data storage device, and the like.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for setting a task comprising:
acquiring (201, 301, 401, 501) a history operation record of a user for operating a household appliance;
detecting (202, 302, 402, 502) whether a regular task exists according to the history operation record, the regular task being a task corresponding to an operation which has been received at a fixed moment for more than a predetermined number of times; and
if the regular task exists, setting (203) a corresponding regular task item for the fixed moment, the regular task item being a task item for the household appliance to perform the regular task when the fixed moment arrives again.

2. The method according to claim 1, wherein setting (203) the corresponding regular task item for the fixed moment comprises:
sending (303, 403) first query information to a mobile terminal, the first query information being configured to query whether to set the corresponding regular task item for the fixed moment;
receiving (304, 404) first feedback information sent by the mobile terminal; and
when the first feedback information represents confirmation, setting (305, 405) the corresponding regular task item for the fixed moment.

3. The method according to claim 1 or 2, further comprising:
performing (306, 406, 506) the regular task according to the regular task item when the fixed moment arrives again.

4. The method according to claim 3, wherein performing (306, 406, 506) the regular task according to the regular task item when the fixed moment arrives again comprises:
detecting whether the household appliance has already performed the regular task when the fixed moment arrives again; and
performing the regular task if the household appliance does not perform the regular task.

5. The method according to claim 3, wherein performing (306, 406, 506) the regular task according to the regular task item when the fixed moment arrives again comprises:
when the fixed moment arrives again, sending second query information to a mobile terminal, the second query information being configured to query whether to allow the household appliance performing the regular task;
receiving second feedback information sent by the mobile terminal; and
when the second feedback information represents that the performing is allowable, performing the regular task.

6. The method according to claim 3, wherein performing (306, 406, 506) the regular task according to the regular task item when the fixed moment arrives again comprises:
when the regular task is stored in a mobile terminal, a household gateway device or a server and when the fixed moment arrives again, sending, by the mobile terminal, the household gateway device or the server, a control instruction of controlling the household appliance to perform the regular task to the household appliance.

7. The method according to any one of claims 1 to 6, further comprising:
acquiring preset information, the preset information comprising at least one of air quality information of a place in which the household appliance is located, a light intensity of the place in which the household appliance is located within a first predetermined time period, a sound intensity of the place in which the household appliance is located within a second predetermined time period and the latest moment of using the household appliance and/or other household appliance in the same LAN as that of the household appliance;
detecting whether the preset information satisfies a preset condition, the preset condition comprising at least one of that the air quality information represents that the air quality is poorer than a preset air quality, the light intensity is less than a preset light intensity, the sound intensity is less than a preset intensity, and the latest moment of using is a moment before a predetermined duration; and
if the preset information satisfies the preset condition, closing the household appliance and other household appliance in the same LAN as that of the household appliance through the household gateway device.

8. A device for setting a task comprising:
an operation record acquisition module (610, 710) configured to acquire a history operation record of a user for operating a household appliance;
a task detection module (620, 720) configured to detect whether a regular task exists according to the history operation record acquired by the operation record acquisition module (610, 710), the regular task being a task corresponding to an operation which has been received at a fixed moment for more than a predetermined number of times; and
a task item setting module (630, 730) configured to, when the detection result of the task detection module (620, 720) is that the regular task exists, set a corresponding regular task item for the fixed moment, the regular task item being a task item for the household appliance to perform the regular task when the fixed moment arrives again.

9. The device according to claim 8, wherein the task item setting module (630, 730) comprises:
a first query information sending submodule (731) configured to send first query information to a mobile terminal, the first query information being configured to query whether to set the corresponding regular task item for the fixed moment;
a first feedback information receiving submodule (732) configured to receive first feedback information sent by the mobile terminal; and
a task item setting submodule (733) configured to, when the first feedback information received by the first feedback information receiving submodule (732) represents confirmation, set the corresponding regular task item for the fixed moment

10. The device according to claim 8 or 9, further comprising:
a task performing module (740) configured to perform the regular task according to the regular task item when the fixed moment arrives again.

11. The device according to claim 10, wherein the task performing module (740) comprises:
a task detection submodule (741) configured to detect whether the household appliance has already performed the regular task when the fixed moment arrives again; and
a first task performing submodule (742) configured to perform the regular task when the detection result of the task detection submodule (741) is that the household appliance does not perform the regular task.

12. The device according to claim 10, wherein the task performing module (740) comprises:
a second query information sending submodule (743) configured to, when the fixed moment arrives again, send second query information to a mobile terminal, the second query information being configured to query whether to allow the household appliance performing the regular task;
a second feedback information receiving submodule (744) configured to receive second feedback information sent by the mobile terminal; and
a second task performing submodule (745) configured to, when the second feedback information received by the second feedback information receiving submodule (744) represents that the performing is allowable, perform the regular task.

13. The device according to claim 10, wherein:
the task performing module (740) is configured to, when the regular task is stored in a mobile terminal, a household gateway device or a server and when the fixed moment arrives again, send, by the mobile terminal, the household gateway device or the server, a control instruction of controlling the household appliance to perform the regular task to the household appliance.

14. The device according to any one of claims 8 to 13, further comprising:
an information acquisition module (750) configured to acquire preset information, the preset information comprising at least one of air quality information of a place in which the household appliance is located, the latest moment of using the household appliance and/or other household appliance in the same LAN as that of the household appliance, a sound intensity of the place in which the household appliance is located within a second predetermined time period and a light intensity of the place in which the household appliance is located within a predetermined time period;
a condition detection module (760) configured to detect whether the preset information satisfies a preset condition, the preset condition comprising at least one of that the air quality information represents that the air quality is poorer than a preset air quality, the light intensity is less than a preset light intensity, the sound intensity is less than a preset intensity, and the latest moment of using is a moment before a predetermined duration; and
a device closing module (770) configured to, when the detection result of the condition detection module (760) is that the preset information satisfies the preset condition, close the household appliance and other household appliance in the same LAN as that of the household appliance through the household gateway device.

15. A computer program, which when executing on a processor of a device, performs a method according to any one of claims 1 to 7.
